# EUROPEAN PATENT APPLICATION

(11) **EP 1 107 131 A2**
(43) Date of publication of application: **13.06.2001**
(21) Application number: 00126626.1
(22) Date of filing: 04.12.2000
(51) Int. Cl.: G06F 17/30

(54) **Virtual machine web browser**

(30) Priority: 03.12.1999 US 169032 P
(71) Applicant: Research In Motion Limited, Waterloo, Ontario N2L 3W8 (CA)
(72) Inventor: Yach, David, Waterloo, Ontario, N2K 2N1 (CA)
(74) Representative: Winter, Brandl, Fürniss, Hübner, Röss, Kaiser, Polte Partnerschaft

(57) **Abstract**

A system and method of browsing documents is provided that does not require a traditional document browsing application at a client device. In order to achieve browsing without a browsing application, the client device first transmits an information request to a host system. The host system retrieves the requested information from one or more information sources that store the information. A translation component receives the information from the host system and translates the information from a plurality of content types into a virtual machine language program. The virtual machine language program is then transmitted to the client device, which executes the virtual machine language program in order to display and interact with the information.

## Description

### BACKGROUND OF THE INVENTION

### 1. Field of the Invention

The present invention relates to the field of retrieving and displaying information via a computer network, such as by browsing World Wide Web (WWW) content on the Internet and displaying the content on a client machine. More specifically, the invention relates to a software system and method for enabling the browsing of WWW content (or other forms of content) without the need for a traditional web browser application (or some other form of content interpretation application) operating at the client machine.

### 2. Description of the Related Art

Web browsers are well known in the art. Products such as Microsoft's Internet Explorer® and Netscape's Communicator® dominate the market for browsing WWW content. Those skilled in the art of Internet browsing will appreciate that a large number of problems are growing and continue to remain unsolved with these traditional browser applications. These problems include: (1) the growing incompatibility between content sent and rendered by browsers in the marketplace; (2) the growing divisions between 'scripting' languages used by browsers, for example, Javascript and Visual Basic Script; (3) current browsers are becoming a tangled mess of runtime environments, including the browser runtime environment, the Javascript runtime environment, the Java runtime environment and the Visual Basic runtime environment; (4) the inter-relationship between these runtime environments is creating a system too complex to debug and too large for small systems, particularly portable devices using wireless data networks; (5) the growing size and complexity of web pages, specifically those pages that include multimedia graphical and video content, is placing major strain on the Internet infrastructure and is impossible to support on limited-bandwidth wireless devices; and (6) changing browsers, or versions, or updates, and the subsequent deployment to the marketplace necessitates frequent updates for each client machine using the browser. This last problem is compounded with mobile devices, such as cell phones, pagers, and handheld devices, which typically cannot be upgraded over-the-air because of security concerns and rollover complexities.

### SUMMARY OF THE INVENTION

A system and method of browsing documents is provided that does not require a traditional document browsing application at a client device. In order to achieve browsing without a browsing application, the client device first transmits an information request to a host system. The host system retrieves the requested information from one or more information sources that store the information. A translation component receives the information from the host system and translates the information from a plurality of content types into a common virtual machine language program. The common virtual machine language program is then transmitted to the client device, which executes the virtual machine language program in order to display and interact with the information.

The present invention overcomes the problems previously noted and solves the need for transferring complex content over the Internet, particularly to small handheld devices. In solving the problem of browser complexity and deployment, the invention provides a Virtual Machine (VM) at the client machine in place of the much larger traditional web browser applications, such as Internet Explorer® or Netscape Communicator®. In solving the problems of incompatibility, legacy content, and bandwidth heavy content types, the invention provides one or more translation components for converting the HTML, HDML, XML, WML, and other content types into commonly formatted virtual machine programs for direct execution by the Virtual Machine operating at the client machine.

The invention allows the oversized browser application to be broken into much smaller sub-components. These sub-components may include an information-fetching component that allows the user to select information to be retrieved, cached and listed, and the virtual machine component for executing the translated virtual machine programs. Because everything fetched by the user of the client machine is a virtual machine program (as opposed to text with embedded tags or some other form of content), a developer can develop an application to process HTML information directly. This would, for example, allow a small cell phone user to first download a small Wireless Markup Language (WML) page-rendering program using HTTP, and then start to access WML web sites offering this specialized information content for handheld devices.

The invention solves problems with every growing web site page content by using a programmatic language (such as a virtual machine language) to replace a page-rendering language (such as HTML). Problems related to scripting, animation, special window controls, and pop-up advertising, which are typically performed with a combination of HTML, Java-script and Java, lead to a large complex page that is clogging the Internet capacity limits. For those skilled in the art, it is clear that by using a pure VM language to express this information, the developer can focus on getting the best solution to the problem using native language calls and commands. When converting HTML, HDML, XML or WML to this VM language, the content of the information transferred can be reduced to its smallest size using a tokenization technique (specialized compression).

The preferred client machine for viewing Internet information in the context of this invention is a mobile device on a wireless digital data network, although the invention can be extended to any type of computing apparatus, whether portable, handheld, desktop, or mobile. One of these wireless digital data networks is the Mobitex Radio Network ("Mobitex"), which has been developed by Eritel and Ericcson of Sweden, and is operated by BellSouth Wireless Data in the United States. Another network is the DataTAC Radio Network ("DataTAC"), which has been developed by Motorola/IBM and which is operated by American Mobile Satellite Corporation (AMSC) in the United States and Bell Mobility in Canada.

According to one method of the present invention, any information source accessed via a TCP/IP network, using a standard information retrieval protocol like Hyper-text Transfer Protocol (HTTP), will provide information that will subsequently be translated into a common virtual machine language to be executed by a virtual machine (VM) operating at a client machine in place of traditional marked-up pages that must be rendered by a web browser. The traditional Internet browser or viewer is replaced with a virtual machine (VM) interpreter that is capable of dynamic program download and execution, and is also capable of providing advanced program behaviors and controls. This methodology is preferably accomplished by: (i) defining a language, such as Java, to be used in place of HTML, HDML or WML; (ii) making a request for information from a wireless handheld device, cell phone, or traditional desktop via the virtual machine program interpreter using a traditional universal resource identifier/locator (URI or URL); (iii) translating the information into the defined virtual machine language; and (iv) transmitting the virtual machine language to the wireless handheld device instead of the raw information.

The information source can either be a traditional web server or a gateway machine making the request on behalf of the requesting device *(i.e.,* the client machine). The virtual machine program interpreter on the handheld device (or other form of client machine) has no direct HTML, WML, HDML, or other content-specific rendering components, but only includes the VM that is used to execute programs that are downloaded from the web server or gateway. It is therefore possible to download a personality, like a WML formatter into the device and start viewing information in a more conventional way.

A system according to the present invention includes a Virtual Machine (VM) on the client device for interpreting run-time programs, and which operates in place of a traditional web browser, and a gateway device that is capable of translating legacy formats to the virtual machine language chosen for the client. The gateway device includes a plurality of translator components for converting the legacy content information in a variety of formats into a common run-time program that can be directly executed by the virtual machine. Using a VM as the browser itself has two immediate impacts upon the viewing paradigm. These impacts are as follows: (i) delivering virtual machine programs as content to the viewer, and (ii) converting existing HTML, HDML, XML and WML content into programs for the viewer by using a translator. In the preferred embodiment, the VM is a Java VM running the new Micro Edition of the Java definition.

The impact of this invention is dramatic, and effectively means that current HTML browsers, consisting of megabytes of executable code, can be reduced to a small footprint VM for interpreting programs. For small devices, such as cell phones, wireless handheld devices and palm-top computers, this small footprint is essential for creating a solution that can run in the limited memory space available in such devices.

The present invention addresses many of the problems listed above, and provides many advantages. First, by using a common run-time language, all Virtual Machine (VM) interpreters are standardized. Languages like Java are now considered a mature language and changes are rare and usually backward compatible in all cases.

Second, the use of scripting languages within HTML content is an insufficient method for doing programmatic logic and has been designed mostly for parameter verification, not animation support and active web page support. The use of a full language provides much more program control, inter-task communications and flexibility for doing complex operations.

Thirdly, the current use of the Java language with existing browsers provides limited program execution within a browser program designed for HTML rendering. Supporting Java within the browser is resulting in very complex and large browsers, which is in turn limiting where the browser can be used. The interaction between these two real-time engines also adds to complexity and reduces quality. Eliminating the HTML component of the browser, and making it only a VM means the size and complexity are dramatically reduced. This also means that a developer with lots of memory space could make a VM program whose job it is to interpret HTML tags and syntax. Multiple programs can support inter-task communications, parameter passing and a wide variety of programmatic methods that those skilled in the art can appreciate are not available today.

Fourth, by using a programming language instead of a markup language, the developer will be able to do infinitely more complex tasks in less space. As the tasks of animation, advertising and active web page development continues to grow in complexity, it is reaching into the need to use a full programmatic language. By using a real programming language at the core of the browser these advanced features are tremendously easier to achieve. Currently, companies are stretching HTML and scripting to their limit to "keep the eye of the consumer" and it is putting heavy demands on the Internet capacity and backbone.

Fifth, another exceptional feature of using Java to present information to the user is that the program interpreter running as the viewer rarely needs to change. The sophistication of the program being delivered can increase and get more complex but the interpreter can stay the same for a very long time and offer continued increasingly complex solutions. This can especially help solve additional problems in the area of browser size. To execute some of these 'complex' mark up pages the browsers are growing into monolithic sized programs. These large browsers are incapable of running on small device, palm-tops computer, handheld phones and wireless devices. By running a program interpreter on the device the programs size can be kept thin and efficient as necessary for the environment.

Sixth, by using a pure Virtual Machine as the 'base-line' of the product it is easy to upgrade and add new functionality. In today's market to get an update to a browser requires a 56K baud modem or connection to the Internet and about 30 minutes of download time. This is mostly because it is a one-size serves all and every component and piece of HTML functionality must be in every browser shipped. By offering a flexible method for delivering the browser as a Java application, the browser software can start out as a small subset of HTML and grow as the need and technology evolves. This kind of staged evolution of browser technology is exactly what small devices and wireless devices need today for the support of Internet information.

And seventh, by using a translator to convert existing web content, whether it be HTML, HDML, XML or WML into virtual machine language these translations can be improved and improved without affecting the virtual machine itself. This ability to upgrade the translation to better convert and render legacy formats means an even further reduction in the need to upgrade the browsers being used by customers.

These are just a few of the many advantages of the present invention, which is described in more detail below in terms of the preferred embodiments. Not all of these advantages are required to practice the invention, however, and this listing is provided simply to illustrate the numerous advances provided by the invention. As will be appreciated, the invention is capable of other and different embodiments, and its several details are capable of modifications in various respects. Accordingly, the drawings and description of the preferred embodiments set forth below are to be regarded as illustrative in nature and not restrictive.

### BRIEF DESCRIPTION OF THE DRAWINGS

FIG. 1 is a schematic diagram of a preferred embodiment of the present invention;

FIG. 2 is a detailed diagram of the translation component of FIG. 1;

FIG. 3 is a detailed diagram of the virtual machine (VM) and file explorer of FIG. 1;

FIG. 4 is a flowchart of the preferred steps for fetching virtual machine programs for execution; and

FIG. 5 is a flowchart of the preferred steps used to execute fetched virtual machine programs.

### DETAILED DESCRIPTION OF THE PREFERRED EMBODIMENT

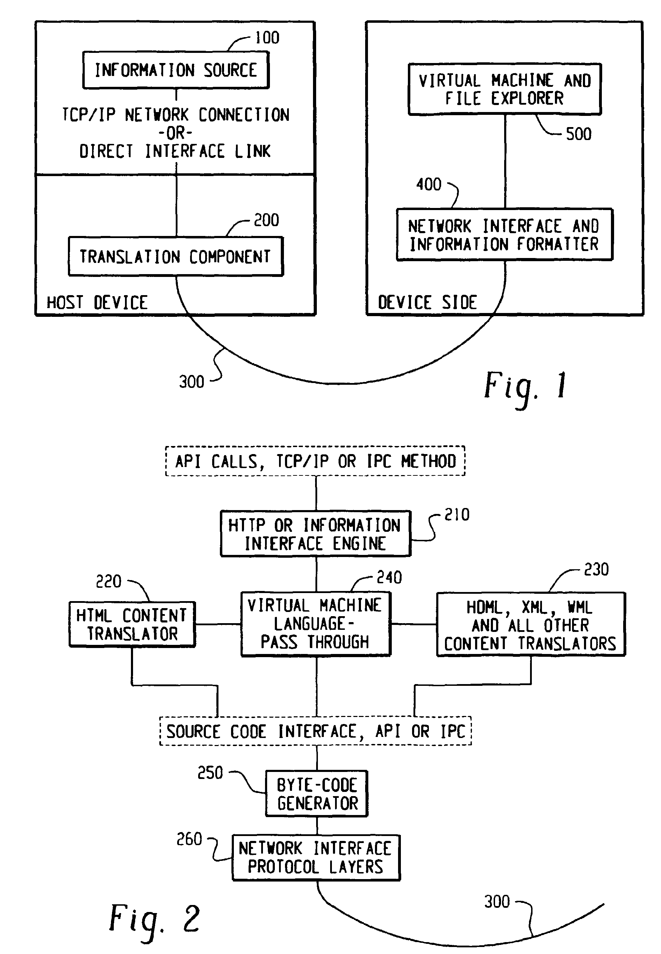

Turning now to the drawing figures, FIG. 1 is a schematic diagram of a preferred system embodiment of the present invention. The system includes a host device having a translation component 200, which is coupled to a client device through a network link 300. Through the translation component 200, the host device is also coupled to one or more information sources 100. The host device is coupled to the one or more information sources 100 via a TCP/IP network connection or a direct interface link. The client device includes a network interface and information formatter component 400 and a virtual machine and file explorer component 500.

The information source 100 is connected to the translation component 200 through a network connection. The information source 100 is a repository of information and data desired by individuals who are in remote proximity to that information. This information is then accessed by the translation component 200 which retrieves the desired information and converts that information, regardless of its content type, into a common run-time program that can be directly executed by the virtual machine component 500 at the client device.

The translation component 200 can either be closely-coupled to the information source 100 by direct API calls or some other inter-process communications (IPC) method, or it can be remotely situated in another location or machine and can then utilize the TCP/IP protocol stack to reach the desired information. In the preferred embodiment, the translation component 200 uses the TCP/IP protocol to retrieve the information, and operates like a gateway to the information for remote users wanting to access it via respective client devices.

Typically, remote access to WWW information is done using TCP/IP either through the Internet or through a private company Intranet site. Those skilled in the art will appreciate that TCP/IP is not, by itself, able to access information from a WWW site, but is used in conjunction with a protocol like HTTP, TCP/IP and HTTP in order to retrieve information. Therefore, another purpose of the translation component 200 is also to provide an HTTP interface when the remote user of the client device is not running a full TCP/IP protocol stack. This is common when the connection method is wireless, for example, when using a cell phone, pager or other various handheld devices.

The network connection 300 may or may not be compatible with TCP/IP and Internet standards, and hence the translation component 200 also may act as a bridge between the Internet and an incompatible network connection 300 like the Mobitex or Datatac networks mentioned earlier. The translation component 200 would thus perform any necessary connection and protocol requirements for both the TCP/IP network on the one side and the incompatible network connection 300 on the other side. Preferably, this network connection 300 is a wireless data network, with limited bandwidth and high data delivery latency, which typically causes TCP/IP to fail when delivering data.

Across the network connection 300, the network interface and information formatter 400 allows the viewing client device to interface to the network 300. If the client device requires a wireless network interface 400 to communicate, then this component 400 would include radio code and radio protocol components. If the network 300 is native TCP/IP, then this component 400 would implement an HTTP protocol for direct access to the host device, and the translation component 200 would be tightly coupled to the information source 100.

Finally, the virtual machine (VM) and file explorer 500 component allows the user of the client device to specify an electronic address to retrieve the desired information, such as by specifying a Universal Resource Locator (URL), a filename, or some other identifier used to target a particular item of information. Those skilled in the art would understand that the URL has become the key addressing mechanism to locate information sources within a given Internet domain on the Internet.

Once the user has identified and retrieved a large number of translated VM programs, he may want to view them or he may want to review what they have cached on the client device. This is sometimes known as the history list, or the favorites list in web browsing terminology. A simple file viewer can be used to view this list in a sorted order, such as in a chronological order. The file explorer component 500 provides an interface so that the user may request the VM programs and is also configured with storage so that the user can later re-execute VM programs previously stored at the client device. The file explorer 500 may also allow the user to see which WWW sites have been visited, recall cached information from these previously visited sites, or delete previous references and clean up local storage.

FIG. 2 sets forth a more detailed schematic of the translation component 200 shown in FIG. 1. The translation component 200 preferably includes an HTTP or information interface engine 210, content translators 220, 230, and 240, a byte code generator 250, and a network interface protocol layer 260. The HTTP or information interface engine 210 interfaces with the information stored either at the host device, or at the one or more information sources 100 that are coupled to the host device. This interface could be a direct API or Inter-process communication (IPC) method, or an HTTP method. The HTTP method is used when the translation component 200 is acting on behalf of the client device and interfaces to an HTTP component of the information source 100. By using the HTTP protocol, which is standard in the Internet community, the translation component 200 is able to reach the widest possible sources of information 100, anything from web sites to Intranet sites, and even proprietary database sources that support TCP/IP and HTTP connections.

The retrieved information is then routed to one of several content translators 220-240 for processing. One type of content translator is the HTML content translator 220, which converts HTML codes into run-time VM programs. This translator 220 converts HTML commands, Java script, VB Script and other HTML content into standard VM programs, which may subsequently be converted into byte code and then sent to the client device for execution. For simple text information, the content translator 220 will turn standard HTML text into something similar to "print" statements. But in other, more complex streams of information, such as where HTML solves complex user input decisions and animation, or when Java or Visual Basic scripting content is used, the content translator 220 generates a VM program that is less complex and much smaller and more efficiently executed than the native HTML source codes.

The following is a simple HTML source example:

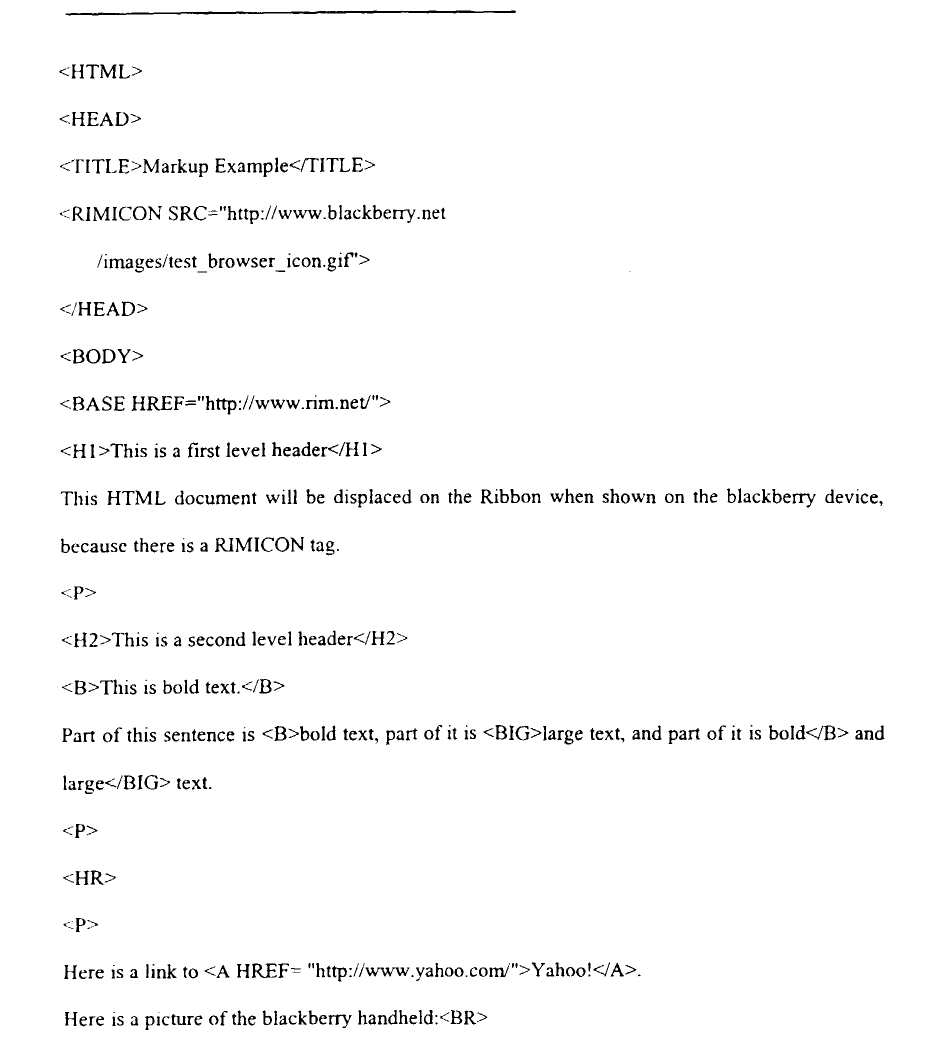

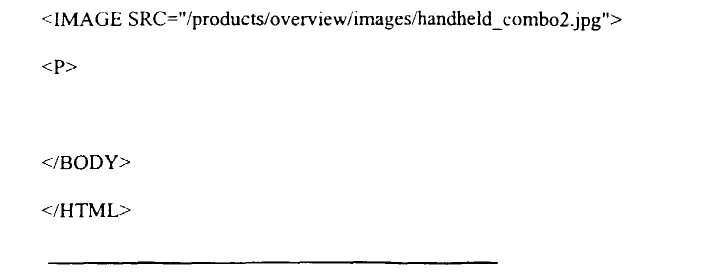

This information would then be translated into the following example Java-executable code for the virtual machine 500 by the HTML content translator 220:

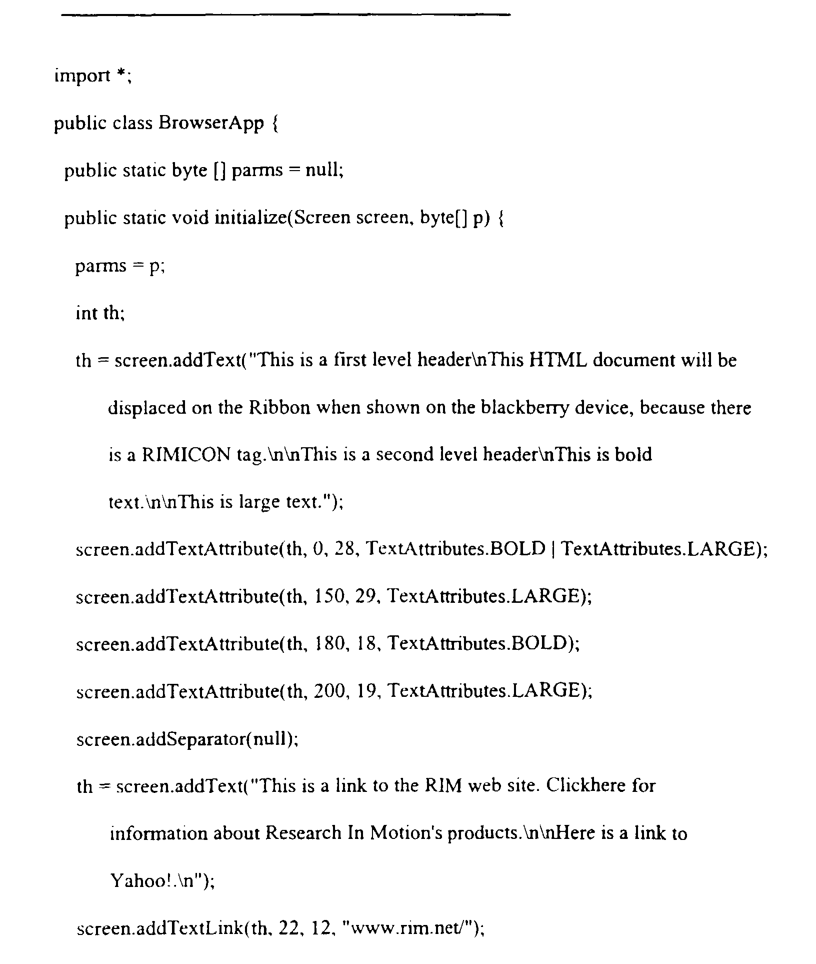

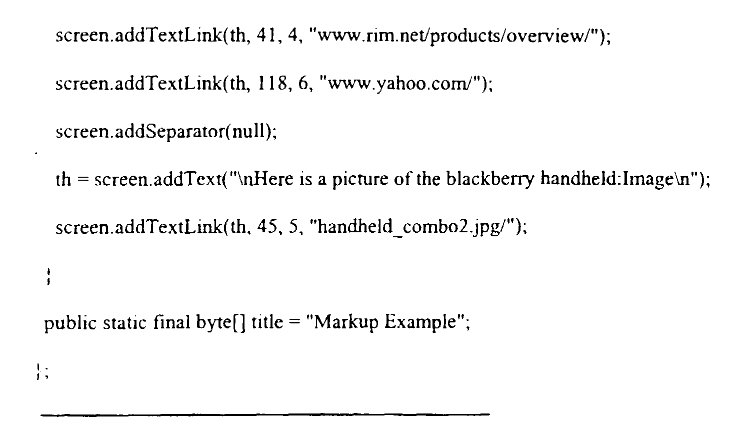

This example, which is related to a specific Virtual Machine 500, uses proprietary API calls like addText and addTextAttribute. These proprietary calls are used because the target platform (client device) is a small handheld computer that uses a specialized set of User Interface API calls. This, in part, demonstrates the scope of the translator 200 in that it can generate any range of specialized calls dependent on the type of target device. Thus, the HTML can be translated to Java with unique User Interface calls for cell phones and another set of User Interface calls for handheld computers.

Another type of content translator 230 receives information formatted via a Wireless Markup Language (WML), and converts this WML information into run-time VM programs in similar fashion as the HTML content translator 220. Additional content translators could be created to translate Handheld Device Markup Language (HDML), Extensible Markup Language (XML), or any other type of content into the common VM language.

The translation component 200 may also include a virtual machine pass through filter 240 that would allow for an information source 100 to send native VM programs directly to the client device for execution. This could be used in new information sources and hosts where the developer wanted the best and fastest method for working with a specific client device or set of devices.

These components 220-240 output the common run-time VM programs into an optional byte-code generator 250 that accepts the VM program as input and turns the source code representation (as seen above) into byte code representations. Programmatic languages use conditional words like "if," "for," "while," and "return," and definitive words like "include," "boolean," "int," "byte," and "char" to create a logic flow and syntax. Using the byte code generator 250, these words in the VM program can be translated into corresponding numbers and characters, such as 1, 2, 3, A, B, C, etc. for reducing the size of the VM program, thereby providing a data compression function. If the network 300 does not need the size reduction or if the client device includes the ability to understand the full English words, then the byte-code generator 250 could be excluded from the translation component 200.

Finally, to connect the translation component 200 to a network there are preferably network and protocol layers 260 for communication to the end-user devices for executing the VM programs to display the information. These network interfaces could either be TCP/IP and HTTP based protocols, when using native Internet connections to the information source 100, or they could be proprietary wireless protocols when a cell phone or wireless device is being used. In the preferred embodiment, this connection 300 is over a Mobitex or DataTac network using protocols defined by these networks. When using a wireless connection, these protocols also break up and packetize the information for transmission over the network. Additionally, these layers add a network header for routing across the network and a verification or transport layer to ensure all pieces of the information arrived intact to the remote client device.

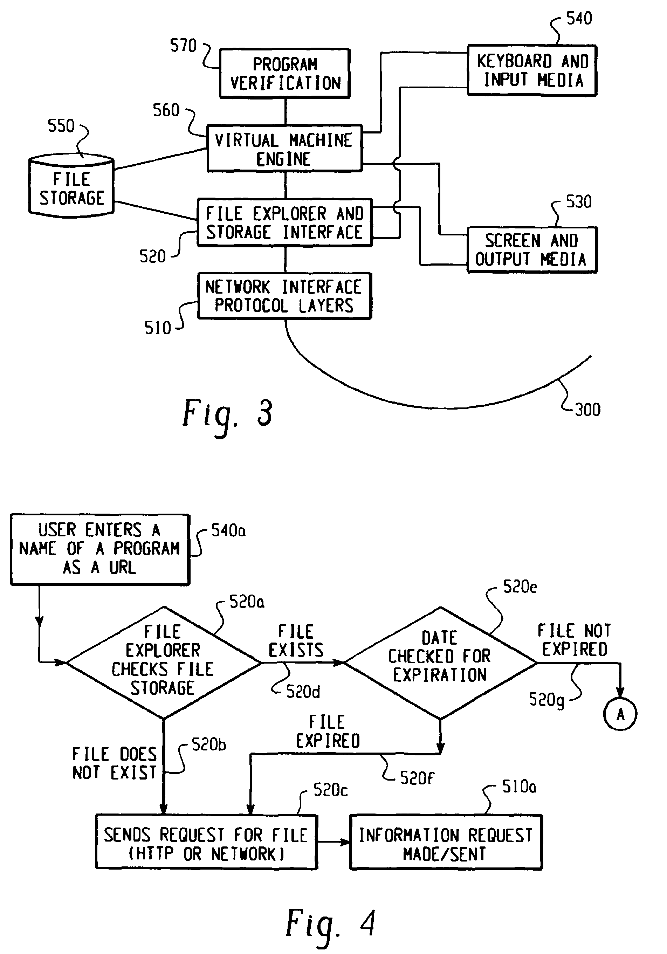

FIG. 3 is a diagram of the virtual machine and file explorer component 500 shown in FIG. 1. This component 500 preferably includes a network interface protocol layer 510, a file explorer and storage interface 520, media components 530 and 540, file storage 550, a virtual machine engine 560, and a program verification component 560. The file explorer 500 selects the VM programs to be executed by the virtual machine. The network interface and protocol layer 510 communicates with the network interface and protocol layers 260 of the translation component 200 of the host device through the network 300. When the network 300 supports native Internet protocols, the connection would use TCP/IP and HTTP protocols. If the network 300 is a proprietary wireless network that does not support Internet protocols, then the connection would use the radiolevel protocols and network protocols necessary to support the wireless network.

The network interface component 510 works directly with the file explorer and storage interface component 520, which provides the initial User Interface (UI) to the user. The user implements the network interface component 510 to specify what information they want and where it is located. The network interface component 510 lists any existing programs (VM programs) that have been previously retrieved and could provide an indication of whether they have been viewed before by using a read or unread flag indicator.

To interface with the user, the file explorer and storage interface 520 component uses the screen and output media component 530 and the keyboard and input media components 540. For visual output, the screen and output media component 530 displays to the user the existing state of the virtual machine environment. This might include file listings of programs on the machine and a section specifying a new information name, like a Universal Resource Locator (URL), for retrieving another piece of information. Those skilled in the art will appreciate that the output media component 530 could range depending on the device being used. The keyboard and input media 540 component allows the user to maneuver through the listing of programs and information sources and make selections. This input could be roller wheels, mouse input, keyboard keys, styli and other devices not listed here but that are common in this field.

Once new information (in the form of VM programs) is received, it is stored in the file storage 550 by the file explorer component 520. The file storage component 550 could be composed simply of RAM storage, but is more likely long-term storage made up of hard disk space, flash memory or other storage media. Those skilled in the art will understand that the storage media can vary from system to system, but having the ability to store the requested programs allows the system to cache and execute any information within the client device.

After the VM program has been retrieved by the file explorer and storage interface component 520, the virtual machine (VM) engine 560 launches with an indicator of which program to execute. The VM engine 560 could then receive the program directly from the file explorer 520 or retrieve the program to be executed from the file system 550. Just prior to execution, the virtual machine engine 560 will validate the program in the program verification component 570 to ensure that the code is correct, accurate and a valid VM program for execution. This step avoids giving the virtual machine engine 560 random binary images for execution.

Once verified, the virtual machine engine 560 then creates the necessary virtual environment for the program and executes the program instructions. As the VM executes the program it uses the screen display and output media 530 and the keyboard and input media components 540 to execute the commands. The end result is a program that can display a full range of complex actions, movements, form presentations and behaviors, and also accept a complex array of keyboard inputs, mouse movements, roller wheel movements, bar code reader inputs, or any other type of electronic inputs.

FIG. 4 is a flowchart of the preferred steps for fetching virtual machine programs for execution. This logic follows the decision path of most browser's currently available in the industry. The main difference is that once the program has been received, it is given to the virtual environment to run, and it is then able to perform native calls within the client device.

In the method of FIG. 4, the user enters the name of a URL or identification string in step 540a on the keyboard of the client device. This information is given directly to the file explorer and storage component 520, which checks the file system for the presence of the file already cached in step 520a. If the file does not exist in the information path 520b, then the file explorer sends a request for the file in step 520c to the host device. The request is sent in step 510a using an HTTP method or a proprietary method, via the network interface component 510. If the file already exists in the information path 520d, then the file explorer component 520 checks to see if the caching date of the file has expired in step 520e. If the caching date has expired in the information path 520f, then a request must be sent to the host device in order to fetch the file in step 520c, using the network interface 510. If the file has not expired in the information path 520g, then it is given to the virtual machine 560 for execution via path (A).

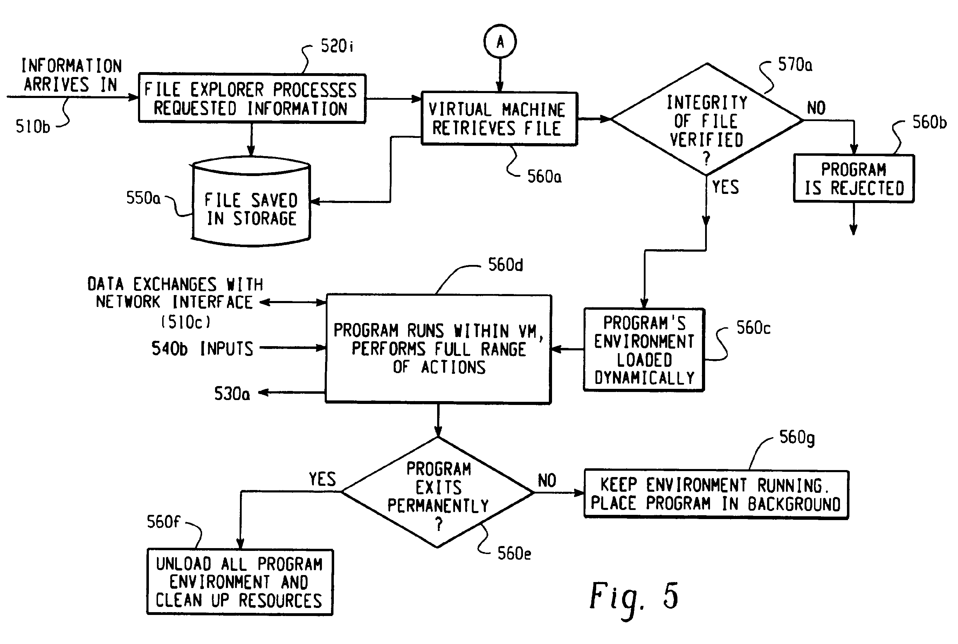

FIG. 5 is a flowchart of the preferred steps used to execute fetched virtual machine programs. There are two main entry routes shown in this figure, either (i) the network interface 510 has received the file from the network 300 and is passing it for processing it from path 510b, or (ii) the information was already in the file system and an indication is being given to the virtual machine engine 560 to execute the file from path (A). The first entry route is used when a new file is received from the host device and it must be passed through the file explorer 520 into the file system 550. The file explorer processes the information 520i by marking the original request as fulfilled, assuming a request was pending, and then saving the information program to the file system 550a. In some cases the new information 520i was not directly requested by the user, but has been 'pushed' to the user based on a set of criteria set up by the user.

The other path shown is labeled (A), and feeds a request into the virtual machine 560. Whether a new file has been received 520i, or an existing file has been found on the file system (A), the virtual machine 560 retrieves the file for verification. It can do this either by processing the received file from path 520i or (A), or it can be given the file identification information and can then retrieve the file directly from the file storage area 550a. Once the file has been retrieved it is passed to the file verifier 570 for verification. If the integrity of the file is verified 570a as bad then the program is rejected 560b. Otherwise, the file is verified as good and the virtual machine 560 takes the next step and loads the program's environment for execution 560c.

The next stage is dynamically executing and running the virtual machine language of the retrieved program using the virtual machine runtime engine 560d. During this process, the program might need to accept inputs 540b from the keyboard and input media 540. During this stage, the program might process keystrokes, mouse movements, roller wheel inputs, bar-code scanner input or even touch screen commands. The program might also have output requirements like User Interface (UI) display changes, LCD blinking, vibrator actions or even printer output. Finally, to allow the newly-loaded program a full programmatic experience, it might also have requirements to do data exchanges through the network interface 510c. In this case the program might be communicating a user's input, like a stock number and checking on inventory levels, their might be customer information that needs to be added to a customer data or thousands of other data exchange requirements. Those skilled in the art will appreciate that the possibilities for building a virtual solution using this programmatic method are almost infinite in variety.

As the program executes there is a decision made to terminate or move to another program. This choice is provided if the virtual machine supports keeping multiple programs running simultaneously. The user decides to terminate or exit the program and is given the choice to terminate permanently or temporarily at step 560e. If the user selects a permanent termination of the program at step 560f, then the virtual machine engine 560 unloads the program's environment, cleans up all used resources and memory and returns to wait for the next program to be executed. If the user selected a temporary termination of the program at step 560g, then the program is simply placed in the background and all its resources and memory are kept active. Background tasks are normally just accessed like cached programs but take immediate control of the foreground and appear to execute instantaneously. This kind of behavior might be common in a field dispatch application or a stock market application.

Having described an example of the invention by way of the drawing figures, it should be understood that this is just one example of the invention, and nothing set forth in this detailed description is meant to limit the invention to this example. Other embodiments, improvements, substitutions, alternatives, or equivalent elements and steps to those set forth in this application are also meant to be within the scope of the invention.

## Claims

1. A system for retrieving information from one or more information sources, wherein the information includes a plurality of content types, comprising:
a host device coupled to the one or more information sources for retrieving the information; and
a translation component coupled to the host device, the translation component including a plurality of content translators, wherein each content translator is configured to translate one of the plurality of content types into common virtual machine language programs.

2. The system of claim 1, further comprising:
a plurality of client devices coupled to the translation component, each of the client devices including an interface for receiving common virtual machine language programs from the translation component and a virtual machine engine for executing the received common virtual machine language programs.

3. The system of claim 2, wherein the plurality of client devices further include a file explorer component for sending an information request to the host device, which then retrieves the requested information from the one or more information sources and passes the requested information to the translation component.

4. The system of claim 1, wherein at least one of the plurality of content translators is an HTML content translator for translating HTML type content into a virtual machine language program.

5. The system of claim 1, wherein at least one of the plurality of content translators is an HDML content translator for translating HDML type content into a virtual machine language program.

6. The system of claim 1, wherein at least one of the plurality of content translators is an XML content translator for translating XML type content into a virtual machine language program.

7. The system of claim 1, wherein at least one of the plurality of content translators is a WML content translator for translating WML type content into a virtual machine language program.

8. The system of claim 1, wherein the plurality of content translators include an HTML content translator and an XML content translator, wherein each of the HTML and XML content translators translates content information into a common virtual machine language program.

9. The system of claim 1, wherein the plurality of content translators include an HTML content translator, an XML content translator and an HDML content translator, wherein each of the HTML, XML and HDML content translators translates content information into a common virtual machine language program.

10. The system of claim 1, wherein the information is retrieved from the one or more information sources through a TCP/IP network connection between the host system and the one or more information sources.

11. The system of claim 10, wherein at least one of the one or more information sources is a web site accessible via the Internet.

12. The system of claim 1, further comprising:
a byte code generator coupled to the translation component for compressing the common virtual machine language programs.

13. The system of claim 12, wherein the byte code generator includes a look-up table that converts source code of the virtual machine language programs into corresponding byte codes.

14. The system of claim 2, further comprising a network coupling the plurality of client devices to the translation component.

15. The system of claim 14, wherein the translation component further includes a network protocol interface for transmitting and receiving data via the network.

16. The system of claim 15, wherein the network protocol interface packetizes the virtual machine language programs for transmission to the plurality of client devices via the network.

17. The system of claim 14, wherein the network is a wireless digital data network.

18. The system of claim 17, wherein the wireless digital data network is a packet data network.

19. The system of claim 2, wherein the plurality of client devices are mobile computing apparatuses.

20. The system of claim 19, wherein the mobile computing apparatuses are PDAs, cellular telephones, Internet appliances, or two-way pagers.

21. The system of claim 2, wherein the content translator further includes a virtual machine pass through component for receiving a virtual machine language program from the host system and for directly transmitting the virtual machine language program to one of the client devices.

22. The system of claim 1, wherein the content translator is located at the host system.

23. The system of claim 1, wherein the content translator is coupled to the host system via an HTTP interface.

24. The system of claim 2, wherein the plurality of client devices further include a program store for storing a plurality of virtual machine language programs received from the translation component.

25. The system of claim 24, wherein the plurality of client devices further include a file explorer and storage interface for generating an information request, determining whether the requested information is associated with a corresponding virtual machine language program stored in the program store, and if so, then retrieving the virtual machine language program from the program store, and if not, then sending the information request to the host system.

26. The system of claim 2, wherein the plurality of client devices further include a program verification component for verifying the integrity of the virtual machine language programs received from the translation component.

27. A system for accessing information, comprising:
a plurality of information sources for storing information including a plurality of content types;
a host device coupled to the plurality of information sources for retrieving the stored information, wherein the host device includes a plurality of content translators for translating the plurality of content types into virtual machine language programs; and
a plurality of client devices for transmitting information requests to access the stored information to the host device and for receiving the virtual machine language programs in response to the information requests, wherein each of the client devices includes a virtual machine engine for executing the virtual machine language programs.

28. A system for browsing documents from a wireless data communication device, comprising:
a wireless data network for communicating with the wireless data communication device;
a gateway system coupled between the wireless data network and a plurality of information sources that store documents, the gateway system including:
an interface for sending information requests to the plurality of information sources and for receiving corresponding documents in return, wherein the documents include a plurality of content types; and
a plurality of content translators for translating the documents into a plurality of virtual machine language programs;
wherein the wireless data communication device includes:
a file explorer for browsing the documents by generating an information request to the gateway system and for receiving a corresponding virtual machine language program; and
a virtual machine engine for executing the received virtual machine language program.

29. The system of claim 28, wherein the wireless data communication device further includes a memory for cacheing a plurality of previously requested virtual machine language programs, wherein the file explorer determines if an information request is associated with a virtual machine language program stored in the memory, and if so, the virtual machine engine retrieves the virtual machine language program from the memory.

30. The system of claim 29, wherein the wireless data communication device further includes a program verification component for verifying the integrity of the virtual machine language programs received from the gateway system.

31. The system of claim 28, wherein the plurality of content translators include an HTML content translator and a WML content translator.

32. A method of transmitting information from an information source to a client device, comprising the steps of:
retrieving the information from the information source;
translating the information from at least one content type into a virtual machine language program; and
transmitting the virtual machine language program to the client device via a network.

33. The method of claim 32, further comprising the step of executing the virtual machine language program at the client device using a virtual machine engine.

34. The method of claim 32, further comprising the step of storing a plurality of virtual machine language programs at the client device.

35. The method of claim 33, further comprising the steps of:
generating an information request at the client device;
determining whether a virtual machine language program associated with the information request is stored at the client device; and
if the associated virtual machine language program is not stored at the client device, then sending the information request to the information source.

36. The method of claim 32, further comprising the step of compressing the virtual machine language program using a byte code generator prior to transmitting the virtual machine language program to the client device.

37. A method of retrieving information from one or more information sources, wherein the information includes a plurality of content types, the method comprising the steps of:
sending an information request from a host system to the one or more information sources to retrieve the information;
translating the information into one or more virtual machine language programs; and
transmitting the one or more virtual machine language programs to a client device that generated the information request.

38. The method of claim 37, further comprising the steps of:
providing a plurality of content translators, wherein each content translator is configured to translate one of the plurality of content types; and
operating the content translators in order to translate the plurality of content types into the one or more virtual machine language programs.

39. The method of claim 37, further comprising the step of executing the virtual machine language programs at the client device.

40. The method of claim 39, further comprising the step of storing the virtual machine language programs at the client device.

41. The method of claim 40, further comprising the steps of:
sending an information request from the client device to the one or more information sources if a virtual machine language program associated with the information request is not stored at the client device.

42. The method of claim 37, further comprising the step of compressing the virtual machine language programs prior to transmitting them to the client device.

43. A method of browsing documents stored at a plurality of information sources, wherein the documents include a plurality of content types, the method comprising the steps of:
retrieving a requested document from one of the plurality of information sources;
translating the requested document into a virtual machine language program;
transmitting the virtual machine language program over a wireless network to a wireless data communication device; and
executing the virtual machine language program at the wireless data communication device.
